# EUROPÄISCHE PATENTSCHRIFT

(11) **EP 1 222 481 B1**
(45) Veröffentlichungstag und Bekanntmachung des Hinweises auf die Patenterteilung: **07.05.2003**
(21) Anmeldenummer: 00929242.6
(22) Anmeldetag: 24.03.2000
(51) Int. Cl.: G02B 5/08, G02B 5/28, G02B 1/10, H01K 1/32, B32B 17/06, B32B 27/06, B29D 11/00, B29C 51/14, B29C 55/02

(54) **VERFAHREN ZUR HERSTELLUNG EINER DIELEKTRISCHEN MEHRSCHICHTVERSPIEGELUNG**
PROCESS FOR PRODUCTION OF A DIELECTRIC MULTI-LAYERED REFLECTING COATING
PROCEDE DE FABRICATION D'UN REVETEMENT REFLECHISSANT DIELECTRIQUE A PLUSIEURS COUCHES

(30) Priorität: 29.09.1999 DE 19946793
(43) Veröffentlichungstag der Anmeldung: 17.07.2002
(73) Patentinhaber: IP2H AG, 3013 Bern (CH)
(72) Erfinder: ARNOLD, Jörg, D-69117 Heidelberg (DE)
(74) Vertreter: Maisch, Thomas, Dr. rer. nat.
(86) Internationale Anmeldenummer: DE0000913
(87) Internationale Veröffentlichungsnummer: WO01023915

(56) Entgegenhaltungen:
- WO-A-94/10589
- DE-A- 2 050 650
- GB-A- 2 232 498
- US-A- 3 711 176
- US-A- 4 430 288
- US-A- 4 735 669
- US-A- 4 937 134
- US-A- 4 975 103
- US-A- 5 697 192

## Beschreibung

Die Erfindung betrifft ein Verfahren zur Herstellung einer dielektrischen Mehrschichtverspiegelung. Ein solches Verfahren ist beispielsweise aus der Druckschrift W0 94 10589 A bekannt.

Dielektrische Mehrschichtverspiegelungen, d. h. Verspiegelungen aus mehreren dielektrischen Schichten, werden bereits seit langem zur spektral selektiven Reflexionsförderung oder Transmissionsförderung bei optischen Fenstern und sonstigen optischen Bauteilen und Geräten verwendet. Des weiteren ist es bekannt, die Kolben von Lampen zu verspiegeln. Das Ziel derartiger Verspiegelungen besteht immer darin, bestimmte Strahlungsanteile zu reflektieren, während bestimmte andere Strahlungsanteile mit bestimmten anderen Wellenlängen transmittiert werden.

Derartige Mehrschichtverspiegelungen werden in herkömmlicher Weise durch das Aufbringen von einzelnen dielektrischen Schichten hergestellt, die sich meist aus zwei unterschiedlichen dielektrischen Materialien zusammensetzen und möglichst unterschiedliche Brechungsindizes aufweisen. Das Aufbringen der Schichten erfolgt meist durch Aufdampfen oder durch Abscheiden aus einer Lösung. Die Verspiegelung wird dann dadurch erzeugt, daß eine aus beispielsweise zwei unterschiedlichen Materialien hergestellte Doppelschicht mehrfach geschichtet wird, so daß eine periodische Abfolge der unterschiedlichen Schichten entsteht.

Die unterschiedlichen Schichten müssen eine in engsten Toleranzen genau einzuhaltende optische Schichtdicke aufweisen, um die angeforderte Spiegelgüte und spektrale Reflexions- und Transmissionscharakteristik zu erreichen. Unter optischer Schichtdicke versteht man üblicherweise die geometrische Schichtdicke, die mit dem Brechungsindex des dielektrischen Materials der Schicht multipliziert ist. Die optische Schichtdicke kann von Doppelschicht zu Doppelschicht in vorgegebener Weise variieren.

Der herkömmliche Herstellungsprozeß von solchen dielektrischen Mehrschichtverspiegelungen ist kompliziert, wobei beispielsweise aufwendige und teure Hochvakuum-Bedampfungsanlagen eingesetzt werden. Dabei müssen die Schichten einzeln nacheinander aufgebracht werden. Der Verspiegelungsprozeß kann des weiteren nur im Rahmen einer Chargenproduktion durchgeführt werden. Eine Massenproduktion im Rahmen einer Fließbandproduktion ist bei der geschlossenen Hochvakuum-Aufdampftechnik nicht möglich. Weiterhin ist die durch das einzeln nacheinander erfolgende Aufbringen erreichbare Spiegelgüte begrenzt. In herkömmlicher Weise können großtechnisch lediglich maximal bis zu 70 dielektrische Schichten bzw. 35 dielektrische Doppelschichten auf gekrümmte Oberflächen aufgebracht werden. Damit läßt sich für eine breitbandige Verspiegelung ein Reflexionskoeffizient von 0,7 erreichen. Eine rundum verlaufende dielektrische Mehrschichtverspiegelung von z. B. zylindrischen Gegenständen ist in herkömmlicher Weise technologisch nicht möglich. Dabei können nur plane oder wenig gekrümmte Flächen wie z. B. Linsenoberflächen mit dielektrischen Mehrschichtverspiegelungen bedampft werden.

Zusammenfassend ist mit bekannten Mehrschichtverspiegelungen ein Reflexionskoeffizient von maximal 0,7 erreichbar.

Der vorliegenden Erfindung liegt daher die Aufgabe zugrunde, ein Verfahren zur Herstellung einer dielektrischen Mehrschichtverspiegelung anzugeben, mit dem eine Mehrschichtverspiegelung mit erhöhtem Reflexionskoeffizienten auf einfache Weise realisierbar ist.

Erfindungsgemäß ist die voranstehende Aufgabe durch ein Verfahren zur Herstellung einer dielektrischen Mehrschichtverspiegelung mit den Merkmalen des Patentanspruchs 1 gelöst. Danach werden zunächst u.a. zumindest zwei dielektrische Schichten mit jeweils einer vorgegebenen anfänglichen Dicke bereitgestellt. Anschließend werden die Schichten zur Bildung eines Schichtpakets übereinander angeordnet. Schließlich werden die Dicke des Schichtpakets und damit die Dicken der einzelnen Schichten durch ein Verformen des Schichtpakets unter Beibehaltung des Dickenverhältnisses oder der Dickenverhältnisse der Schichten zueinander reduziert.

In erfindungsgemäßer Weise ist erkannt worden, daß es neben den bekannten Herstellungsverfahren einer dielektrischen Mehrschichtverspiegelung - Aufdampfen einzelner Schichten oder Abscheiden von Schichten aus einer Lösung - noch eine weitere Herstellungsmöglichkeit dielektrischer Mehrschichtverspiegelungen gibt. Hierbei werden letztendlich die gewünschte Anzahl an Schichten zunächst zu einem Schichtpaket übereinander angeordnet. Dabei ist wesentlich, daß die Dicken der Schichten derart ausgewählt werden, daß die Dickenverhältnisse der Schichten relativ zueinander korrekt sind. Die einzelnen Schichten können dabei erheblich dicker sein als im Endzustand der Verspiegelung. Dies vereinfacht die Handhabung der einzelnen Schichten erheblich. Im weiteren Verfahren werden die Dicke des Schichtpakets bzw. die Dicken der einzelnen Schichten durch einen Verformungsschritt gegebenenfalls erheblich reduziert. Hierbei bleiben jedoch die Dickenverhältnisse der Schichten zueinander erhalten. Mit anderen Worten wird das Schichtpaket "makroskopisch" vorgegeben, um dann nach Abschluß des Herstellungsverfahrens "mikroskopisch" vorzuliegen.

Bei dem erfindungsgemäßen Herstellungsverfahren existiert keine technische Limitierung der maximalen Anzahl an Schichten im Bereich von 70 Einzelschichten bzw. 35 Doppelschichten. Folglich ist in einem vorgegebenen Wellenlängenintervall, dessen Wellenlängen beispielsweise reflektiert werden sollen, eine erheblich größere Anzahl an Wellenlängen reflektierbar, denen jeweils Einzelschichten bzw. Doppelschichten zur Reflexion zugeordnet sind. Hierbei ist die Verwendung von beispielsweise 400 Doppelschichten durchaus realistisch. Dabei ergibt sich ein erheblich höherer Reflexionskoeffizient als der bisher erreichbare Reflexionskoeffizient von 0,7.

Folglich ist mit dem erfindungsgemäßen Verfahren zur Herstellung einer dielektrischen Mehrschichtverspiegelung ein Verfahren angegeben, mit dem eine Mehrschichtverspiegelung mit erhöhtem Reflexionskoeffizienten auf einfache Weise realisierbar ist.

Im Rahmen des Bereitstellens der dielektrischen Schichten werden die anfänglichen Dicken der Schichten vorgegeben. Dabei könnten die anfänglichen Dicken der zumindest zwei Schichten unterschiedlich sein. Bei der Bereitstellung von mehr als zwei Schichten könnten sämtliche Schichten unterschiedlich dick sein oder auch Gruppen von Schichten dieselbe Dicke aufweisen. Hierbei ist jede Kombination denkbar, wobei die Dicken auf die Wellenlängen der zu reflektierenden Strahlung abzustimmen sind.

Zumindest eine Schicht könnte in besonders einfacher Weise aus Glas oder Kunststoff ausgebildet sein. Dabei sind Kombinationen aus Glas und Kunststoff oder auch einheitliche Schichtpakete aus Glas oder aus Kunststoff denkbar.

Zur wirksamen Reflexion der gewünschten Strahlung könnten zumindest zwei Schichten unterschiedliche Brechungsindizes aufweisen. Es könnten jedoch auch sämtliche Schichten unterschiedliche Brechungsindizes aufweisen.

Des weiteren könnte aus zwei Schichten eine Doppelschicht hergestellt werden. In einer weiteren Ausgestaltung könnten zumindest zwei Doppelschichten gestapelt werden, wobei die optische Schichtdicke von Doppelschicht zu Doppelschicht variieren könnte.

Das Anordnen der Schichten übereinander könnte im konkreten ein Stapeln der Schichten sein. Alternativ hierzu könnte das Anordnen auch ein Aufwickeln der Schichten umfassen, wobei beispielsweise zunächst zwei Schichten übereinander gestapelt werden und dann gemeinsam aufgerollt werden. Hierdurch könnte eine regelmäßige Abfolge von der einen und der anderen Schicht erreicht werden.

Im Hinblick auf eine hohe mechanische Stabilität der Verspiegelung wird das Schichtpaket vor dem Verformen zwischen zwei Trägerschichten angeordnet. Die Schichtdicke der Trägerschichten bestimmt die spätere Dicke des verformten Gesamtmaterials aus Schichtpaket und Trägerschichten und es entsteht ein "Sandwich"-Material. Die Verwendung dicker Trägerschichten, die am Ende des Herstellungsverfahrens mit verformt werden, sichert die notwendige Toleranz der Einzelschichtdicken nach dem Verformungsprozeß, da die erreichbare Schichtdickentoleranz des Verformungsprozesses auf die Gesamtmaterialdicke nach dem Verformungsprozeß zu beziehen ist.

im Hinblick auf eine einfache Handhabung der Trägerschichten wird mindestens eine Trägerschicht aus mehreren Einzelschichten gebildet . Derartige Einzelschichten werden nach und nach jeweils im Anschluß an einen Teilverformungsvorgang an eine vorherige Einzelschicht angeordnet, vorzugsweise angeschmolzen.

Die Trägerschichten oder Einzelschichten könnten in einfacher Weise aus Glas ausgebildet sein. Somit könnte eine Trägerschicht auch in Form eines Trägerglasblocks vorliegen.

Zur sicheren optischen Verbindung der Schichten könnten die Schichten nach dem Anordnen der Schichten übereinander durch ein Verschmelzen verbunden werden. Zur Vermeidung einer Luftblasenbildung zwischen den einzelnen Schichten könnte das Verschmelzen unter Vakuum erfolgen. Die Verbindungstemperatur darf jedoch nur kurz erreicht und gehalten werden, um eine Diffusion oder einen Konvektionstransport der verschiedenen Schichtbestandteile in die angrenzenden unterschiedlichen Schichten und damit ein Ausschmieren des Brechungsindexunterschieds der unterschiedlichen Schichten zu vermeiden.

Hinsichtlich der Verformung des Schichtpakets und der Trägerschichten sind unterschiedliche Verfahren denkbar. Zum einen könnte das Verformen durch einen Preßvorgang erfolgen. Alternativ hierzu könnte das Verformen durch einen Walzvorgang erfolgen, wobei hier ebenfalls eine Art Pressen angewandt wird. In einer weiteren Alternative könnte das Verformen durch einen Ausziehvorgang des Schichtpakets erfolgen. Mit allen Verfahren können die Schichtdicken auf die notwendigen sehr geringen Schichtdicken unter Beibehaltung der Schicktdickenverhältnisse reduziert werden.

Eine vereinfachte Verformung könnte unter Wärmeeinwirkung erfolgen. Dabei ist jedoch darauf zu achten, daß die verwendeten Temperaturen nicht zu weit über der Temperatur der mechanischen Fließgrenze der Schichtmaterialien liegen, damit kein ungewollter Materialtransport durch beispielsweise Diffusion oder Konvektion zu einer Durchdringung bzw. Durchmischung der verschiedenen Schichtmaterialien führt und dadurch die einzuhaltenden geometrischen Grenzen aufgelöst oder ungewollt deformiert werden.

Zur weitestgehenden Vermeidung irgendwelcher Diffusions- oder Konvektionsvorgänge könnte das Verformen ohne Zufuhr zusätzlicher Wärme erfolgen.

Im Hinblick auf eine wirtschaftlich interessante Anwendung könnten aus dem verformten Schichtpaket Röhren oder gekrümmte Scheiben hergestellt werden. Röhren könnten beispielsweise als Ausgangsmaterial für Lampenkolben dienen. Gekrümmte Scheiben könnten beim Automobilbau verwendet werden.

Es ist günstig, wenn das Schichtpaket bzw. die eigentliche dielektrische Vielschicht sehr nahe unter einer der Oberflächen des Gesamtmaterials liegt, und zwar in der Nähe einer Innenoberfläche der Röhren oder gekrümmten Scheiben. Hierdurch läßt sich ein hohes Maß an Reflexion von beispielsweise innen erzeugter Infrarotstrahlung erreichen, wobei die Restabsorption der Infrarotstrahlung im Gesamtmaterial aus Trägerschichten und Schichtpaket minimiert ist.

Die Mehrschichtverspiegelung kann im Rahmen eines Mehrschichtspiegelbelags auf einem Grundkörper realisiert sein. Hierbei ist das Schichtpaket auf einem im wesentlichen tragenden Grundkörper angeordnet.

Mit dem erfindungsgemäßen Verfahren können Verspiegelungen hergestellt werden, die einer weiteren gleichmäßigen Verformung - beispielsweise die Herstellung von zylindrischen Röhren oder gekrümmten Fensterscheiben - unterzogen werden können, ohne daß die Spiegeleigenschaften bzw. die dielektrischen Schichtverhältnisse gestört werden. Somit können beispielsweise dielektrische Mehrschichtspiegelmäntel für beispielsweise zylindrische Lampenkörper oder -kolben hergestellt werden. Dies ermöglicht wiederum die Verspiegelung von beispielsweise Lampen als Herstellungsschritt von der Lampenherstellung selbst abzukoppeln. Des weiteren lassen sich beispielsweise Flachglasscheiben, Autoglasscheiben, Autoscheinwerferscheiben oder Lampenkolben herstellen, die bereits die geforderten Verspiegelungseigenschaften materialinherent mitbringen, so daß der Verspiegelungsprozeß solcher Objekte als gesonderter Produktionsschritt entfällt. Die Verspiegelungseigenschaften werden durch die Anordnung der Schichten mit quasi beliebiger Dicke und quasi beliebigen periodischen Abfolgen festgelegt.

Im Hinblick auf die glastechnologische Anwendung eines dielektrischen Vielschichtglasmaterials wurden ausgiebige Untersuchungen durchgeführt. Der Herstellungsprozeß eines dielektrischen Vielschichtglasmaterials teilt sich günstigerweise in drei Herstellungsabschnitte auf. Im ersten Herstellungsabschnitt wird ein Vielschichtglaspaket hergestellt. Im zweiten Herstellungsabschnitt wird dieses Paket zu einem Flachglas ausgewalzt und im dritten Herstellungsabschnitt werden aus dem Flachglasmaterial Röhren für die Lampenherstellung bzw. Herstellung von Lampenkolben konfektioniert.

in der modernen Lampentechnologie ist es günstig, wenn der Lampenkolben einen Großteil der durch ein Filament bzw. einen Glühdraht emittierten Wärmestrahlung wieder zum Filament bzw. zum Glühdraht reflektiert. Dies ermöglicht ein Rückheizen des Filaments bzw. Glühdrahts, wodurch zum Erreichen derselben Filament- bzw. Glühdrahttemperatur das Zuführen von weniger elektrischer Energie zum Filament bzw. Glühdraht als bei herkömmlichen Lampen ohne reflektierenden Kolben ermöglicht ist. Je mehr Wärmestrahlung von der Innenseite des Lampenkolbens reflektiert werden kann, desto günstiger ist die Konversionseffizienz zwischen zugeführter elektrischer Leistung und abgestrahltem und transmittiertem sichtbaren Licht des Filaments bzw. Glühdrahts. Folglich ist bei modernen Lampen ein hoher Reflexionskoeffizient für Wärmestrahlung, d. h. für Strahlung in einem gewissen Wellenlängenintervall, gewünscht. Mit der in erfindungsgemäßer Weise hergestellten Mehrschichtverspiegelung ist ein sehr hoher Reflexionskoeffizient im gewünschten Wellenlängenintervall erreichbar.

Hierzu werden die Vielschichtglaspakete entsprechend der geforderten optischen Relfexions- bzw. Transmissionscharakteristik zusammengestellt. Der spektrale Transmissionsbereich soll beispielsweise zwischen den Weltenlängen λ₀ und λ₁ liegen. Der spektrale Reflexionsbereich soll beispielsweise zwischen den Wellenlängen λ₁ und λ₂ liegen. Für eine breitbandige Reflexion mit hohem Reflexionskoeffizient zwischen den Wellenlängen λ₁ und λ₂ werden die Einzelschichtdicken dᵢ zwischen den Schichtdickengrenzen d₁ = k λ₁/ (4n₁₁) und d₂ = k λ₂/ (4n₂₁) mit den respektiven Brechungsindizes n; der beiden verschiedenen verwendeten Glassorten kontinuierlich oder stufenweise vergrößert, wobei hier die λ/4-Bedingung des optischen Wegs gilt. k ist der Dilatationsfaktor der Glaspaketdicke im gesamten Auswalzprozeß.

Für die Schichtdickengrenze d₂ und damit für die Reflexionsbandbreite besteht allerdings die Randbedingung daß d₂ < k 3 λ₀/(4n₀₁), da sonst das maximal zu transmittierende Licht der Grenzwellenlänge λ₀ ebenfalls maximal reflektiert wird. Für einen Brechungsindex von im Mittel n₀= 1,59 bei der kurzwelligen Transmissionsgrenze λ₀ = 0,4 µm liegt die langwellige Reflexionsgrenze bei einem dort angenommenen mittleren Brechungsindex von n₂= 1,53 bei λ₂= 3 λ₀ n₂/ n₀= 1,15 µm.

Dies betrifft allerdings nur Strahlungsanteile mit senkrechter Inzidenz auf die Verspiegelungsschicht. Für Strahlungsanteile, die mit einem anderen Inzidenzwinkel auf die Verspiegelungsschicht einfallen, verschiebt sich die kurzwellige Reflexionsgrenze zu kürzeren Wellenlängen und die langwellige Reflexionsgrenze zu längeren Wellenlängen hin. Aus diesem Grund können bei einem geforderten Transmissionsbereich von 400 nm bis 700 nm insgesamt Reflexionsbereiche von ca. 700 nm bis ca. 2 µm mit hoher Reflektivität erreicht werden.

Bei dem hier vorgeschlagenen Herstellungsverfahren kann eine sehr große Anzahl dielektrischer Schichten verwendet werden, die wesentlich mehr als 50 und typisch mehrere Hundert dielektrische Schichten betragen kann. Dadurch ist ein geringer Brechungsindexunterschied nieder brechender Glassorten anwendbar, denn die große mögliche Anzahl N dielektrischer Doppelschichten kompensiert die geringen Brechungsindexunterschiede, so daß ein hoher Reflexionskoeffizient R_{2N+1} = (1-n₁/n₂^{2N})²/(1+n₁/n₂^{2N})² erwartet werden kann. Für beispielsweise 400 Doppelschichten in 10 Stufenpaketen mit den beiden mittleren Brechungsindizes im spektralen Reflexionsbereich von 1,5 für Kronglas und 1,6 für Schwerkronglas gegen Luft mit dem Brechungsindex 1 läßt sich ein maximaler Reflexionskoeffizient von 0,98 abschätzen.

Für die Verschmelzung des Vielschichtglaspakets wird ein Vakuumschmelzverfahren angewandt, um eine Luftblasenbildung zwischen den Glasschichten auszuschließen. Die Verbindungstemperatur darf nur kurz erreicht und gehalten werden, um eine Diffusion oder einen Konvektionstransport der verschiedenen Glasbestandteile in die angrenzenden unterschiedlichen Glasschichten und damit ein Ausschmieren des Brechungsindexunterschieds der unterschiedlichen Glasschichten zu unterdrücken.

Das eigentliche die Reflexionscharakteristik bestimmende Vielschichtglaspaket wird zwischen zwei Trägerglasblöcken zusammengestellt, deren Schichtdicken die spätere Dicke des ausgewalzten Flachglasmaterials bzw. Lampenrohrmaterials bestimmen. Es entsteht ein "Sandwich"-Material. Die Verwendung dicker Schichten, die später ausgewalzt werden, sichert die notwendige Toleranz der optischen Einzelschichtdicken nach dem Auswalzprozeß, da die erreichbare Schichtdickentoleranz des Auswalzprozesses auf die Gesamtflachglasdicke nach dem Auswalzprozeß zu beziehen ist.

Die Toleranz Δdᵢ einer optischen λ/4-Schicht ist Δdᵢ = Δd k. Die erreichbare Toleranz Δd in der Flachglasproduktion beträgt absolut bereits 3/100 mm für z. B. Mikroskopierdeckgläschen. Für einen Sandwichblock mit 400 dielektrischen Doppelschichten von im Mittel zweifacher Mikroskopierdeckglasdicke - also 3/10 mm Doppelschichtdicke vor dem Auswalzen - und einer geforderten Doppelschichtdicke von im Mittel zweifacher λ/4-Schichtdicke 2dᵢ = 0,33 µm - bei 1 µm Wellenlänge und korrespondierendem mittlerem Glasbrechungsindex von 1,5 - nach dem Auswalzen und einer geforderten Flachglasdicke von 1 mm nach dem Auswalzen beträgt die einhaltbare Toleranz ca. 30 nm je optische Schicht.

Das Vielschichtpaket wird zwischen einer Trägerglasdecke und einem Trägerglasboden angeordnet. Trägerglasdecke und Trägerglasboden haben zum einen die Aufgabe, die spätere Flachglasdicke zu bestimmen, und zum anderen die Aufgabe, oberflächliche Schichtverzerrungen beim Auswalzprozeß abzufangen, so daß der dazwischenliegende dielektrische Vielschichtbereich durch die Randverzerrungen des Auswalzprozesses ungestört bleibt. Der gesamte Sandwichblock hat die Schichtdicke D = d/k, wobei k der Dilatationsfaktor und d die gewünschte Flachglasdicke nach dem Auswalzprozeß ist.

Als Beispiel sind die Dimensionen eines Sandwichblocks mit 400 dielektrischen Doppelschichten, welcher zu einem 1 mm starken Flachglas ausgewalzt werden soll, vor und nach dem Auswalzen aufgeführt.

| Sandwichblockdimensionen | Vor dem Auswalzen | Nach dem Auswalzen |
|---|---|---|
| Einzelschichtdicke | 0,15 x 10⁻³ m | 0,167 x 10⁻⁶ m |
| Dicke von 400 Doppelschichten | 0,12 m | 0,1336 x 10⁻³ m |
| Trägerschichtdicke | 0,78 m | 0,8664 x10⁻³m |
| Sandwichdicke | 0,9 m | 1x10⁻³ m |
| absolute Toleranz je Schichtdicke | 0,03 x 10⁻³ m | 33,3 x 10⁻⁹ m |
| Dilatationsfaktor | 1/900 | 1/900 |

Um die große, hier als Beispiel angegebene anfängliche Schichtdicke des Sandwichblocks von 90 cm im Walzprozeß noch handhaben zu können, können die Trägerglasblöcke durch mehrere Glasplatten gleicher Gesamtdicke ersetzt werden, die dann nach und nach im Anschluß an einen jeweiligen Teilwalzprozeß mit dem Sandwich verschmolzen werden.

Die weitere Bearbeitung des Spiegelglasmaterials für die Lampenproduktion kann mit der bestehenden Flachglasproduktionstechnologie durchgeführt werden. Das entstandene Walzglas kann am Ende des Produktionsprozesses in Glasrohre für eine Lampenproduktion gerollt und konfektioniert werden. Dabei kann die eigentliche dielektrische Vielschicht, die beispielsweise sehr nahe unter einer der Oberflächen des Flachglases liegt, zur Innenoberfläche der Glasrohre hin liegen. Dadurch wird die Restabsorption der Infrarotstrahlung des späteren Lampenkolbens erheblich herabgesetzt.

Bei den bisherigen auf der Außenoberfläche von Lampenkolben aufgedampften Verspiegelungsschichten wird zuerst das Trägermaterial von innen her durchstrahlt, bevor die Infrarotstrahlung die Verspiegelungsschicht erreicht und reflektiert wird. Die Restabsorption im Trägermaterial führt hier zu einem größeren Verlustleistungsanteil bei der Energiebilanz von spektral verspiegelten Glühlampen.

Die weitere Bearbeitung der Spiegelglasröhren zur Lampenherstellung ist unkritisch. Speziell das im Produktionsprozeß der Lampen vorgesehene Ab- bzw. Zuschmelzen der Lampenkolben führt allerhöchstens zu einer Stauchung und Dilatation der unterschiedlichen Glasschichten, wodurch sich die kurzwellige Reflexionsgrenze ebenfalls wieder zu kürzeren Wellenlängen hin verschiebt und somit keine erhöhte transmittierte Verluststrahlung auftritt.

Der möglicherweise erhöhte Herstellungsaufwand für das Vielschichtlampenmaterial gegenüber dem von herkömmlichem Lampenmaterial mit einer separaten Aufdampfung von Spiegelschichten wird sich wegen der großen Chargenproduktion, wegen des Wegfalls des separaten Verspiegelungsaufwands und wegen der günstigeren produktionstechnisch möglichen Bauformoptimierung von Lampen wirtschaftlich rechnen. Als weitere Einsatzfelder des Spiegelglases sind die Gebäudeverglasung und die Automobilverglasung denkbar. Auch hier sind spektrale Reflexions- und Transmissionscharakteristiken wie beispielsweise die Wärmestrahlungsabschirmung gewünscht.

Sämtliche Vorteile der Erfindung ermöglichen die Herstellung von dielektrischen Mehrschichtspiegeln oder Spiegelbelägen, die von der Formgebung her bisher noch nicht möglich waren.

Hinsichtlich weiterer vorteilhafter Ausgestaltungen und Weiterbildungen der erfindungsgemäßen Lehre wird auf die beigefügten Patentansprüche verwiesen.

Abschließend sei ganz besonders hervorgehoben, daß das zuvor rein willkürlich gewählte Beispiel mit beispielsweise 400 Doppelschichten lediglich zur Erörterung der erfindungsgemäßen Lehre dient, diese jedoch nicht auf dieses Ausführungsbeispiel einschränkt.

## Patentansprüche

1. Verfahren zur Herstellung einer dielektrischen Mehrschichtverspiegelung mit den folgenden Schritten:
- Bereitstellen von zumindest zwei dielektrischen Schichten vorgegebener anfänglicher Dicken;
- Anordnen der Schichten übereinander zur Bildung eines Schichtpakets;
- Reduzieren der Dicke des Schichtpakets und damit der Dicken der einzelnen Schichten durch ein Verformen des Schichtpakets unter Beibehaltung des Dickenverhältnisses oder der Dickenverhältnisse der Schichten zueinander,
wobei das Schichtpaket vor dem Verformen zwischen zwei Trägerschichten angeordnet wird und wobei mindestens eine Trägerschicht aus mehreren Einzelschichten gebildet wird,
**dadurch gekennzeichnet, dass** die Einzelschichten nach und nach jeweils im Anschluss an einen Teilverformungsvorgang an eine vorherige Einzelschicht angeordnet, vorzugsweise angeschmolzen, werden.

2. Verfahren nach Anspruch 1, **dadurch gekennzeichnet, dass** die anfänglichen Dicken der zumindest zwei Schichten unterschiedlich sind.

3. Verfahren nach Anspruch 1 oder 2, **dadurch gekennzeichnet, dass** zumindest eine Schicht aus Glas ausgebildet ist und/oder dass zumindest eine Schicht aus Kunststoff ausgebildet ist.

4. Verfahren nach einem der Ansprüche 1 bis 3, **dadurch gekennzeichnet, dass** zumindest zwei Schichten unterschiedliche Brechungsindizes aufweisen.

5. Verfahren nach einem der Ansprüche 1 bis 4, **dadurch gekennzeichnet, dass** aus zwei Schichten eine Doppelschicht hergestellt wird.

6. Verfahren nach Anspruch 5, **dadurch gekennzeichnet, dass** zumindest zwei Doppelschichten gestapelt werden, wobei vorzugsweise die optische Schichtdicke von Doppelschicht zu Doppelschicht variiert.

7. Verfahren nach einem der Ansprüche 1 bis 6, **dadurch gekennzeichnet, dass** das Anordnen ein Stapeln und/oder Aufwickeln der Schichten umfasst.

8. Verfahren nach einem der Ansprüche 1 bis 7, **dadurch gekennzeichnet, dass** die Trägerschichten oder Einzelschichten aus Glas ausgebildet sind.

9. Verfahren nach einem der Ansprüche 1 bis 8, **dadurch gekennzeichnet, dass** die Schichten nach dem Anordnen der Schichten übereinander durch ein Verschmelzen verbunden werden, wobei vorzugsweise das Verschmelzen unter Vakuum erfolgt.

10. Verfahren nach einem der Ansprüche 1 bis 9, **dadurch gekennzeichnet, dass** das Verformen durch einen Pressvorgang und/oder Walzvorgang und/oder Ausziehvorgang erfolgt.

11. Verfahren nach einem der Ansprüche 1 bis 10, **dadurch gekennzeichnet, dass** das Verformen unter Wärmeeinwirkung oder ohne Zufuhr zusätzlicher Wärme erfolgt.

12. Verfahren nach einem der Ansprüche 1 bis 11, **dadurch gekennzeichnet, dass** aus dem verformten Schichtpaket Röhren oder gekrümmte Scheiben hergestellt werden, wobei vorzugsweise das Schichtpaket in der Nähe einer Innenoberfläche der Röhren oder gekrümmten Scheiben angeordnet wird.

13. Verfahren nach einem der Ansprüche 1 bis 12, **dadurch gekennzeichnet, dass** die Mehrschichtverspiegelung im Rahmen eines Mehrschichtspiegels oder im Rahmen eines Mehrschichtspiegelbelags auf einem Grundkörper realisiert wird.

## Claims

1. Method for producing a dielectric multi-layer reflective coating comprising the following steps
- providing at least two dielectric layers of predetermined initial thicknesses;
- arranging the layers one above the other to form a stack;
- reducing the thickness of the stack and therefore the thickness of the individual layers by deformation of the stack while retaining the thickness ratio or ratios of the layers with respect to one another,
the stack being arranged between two carrier layers prior to deformation and at least one carrier layer being formed from a plurality of individual layers, **characterised in that** the individual layers are successively arranged, preferably fused on, a preceding individual layer following a partial deformation process in each case.

2. Method according to claim 1, **characterised in that** the initial thicknesses of the at least two layers are different.

3. Method according to claim 1 or 2, **characterised in that** at least one layer is made of glass and/or **in that** least one layer is made of plastics material.

4. Method according to any of claims 1 to 3, **characterised in that** at least two layers have different refractive indices.

5. Method according to any of claims 1 to 4, **characterised in that** one double layer is produced from two layers.

6. Method according to claim 5, **characterised in that** at least two double layers are stacked, the visual layer thickness preferably varying from double layer to double layer.

7. Method according to any of claims 1 to 6, **characterised in that** the arrangement involves stacking and/or coiling of the layers.

8. Method according to any of claims 1 to 7, **characterised in that** the carrier layers or individual layers are made of glass.

9. Method according to any of claims 1 to 8, **characterised in that** after the layers have been arranged one on top of the other they are connected by fusion, fusion preferably taking place in a vacuum.

10. Method according to any of claims 1 to 9, **characterised in that** deformation is by means of a pressing operation and/rolling operation and/or stretching operation.

11. Method according to any of claims 1 to 10, **characterised in that** deformation takes place under the influence of heat or without the supply of additional heat.

12. Method according to any of claims 1 to 11, **characterised in that** tubes or curved discs are produced from the deformed stack, the stack preferably being arranged in the vicinity of an inner surface of the tubes or curved discs.

13. Method according to any of claims 1 to 12, **characterised in that** the multi-layer reflective coating is produced on a basic body within the framework of a multi-layer mirror or within the framework of a multi-layer mirror coating.

## Revendications

1. Procédé de fabrication d'un revêtement réfléchissant diélectrique à plusieurs couches avec les étapes suivantes :
- mise à disposition d'au moins deux couches diélectriques d'épaisseurs initiales prédéfinies ;
- disposition des couches les unes sur les autres pour former un paquet de couches ;
- réduction de l'épaisseur du paquet de couches et de ce fait de l'épaisseur des couches individuelles par une déformation du paquet de couches en maintenant le rapport des épaisseurs ou les rapports des épaisseurs des couches les unes par rapport aux autres,
le paquet de couches étant disposé, avant la déformation, entre deux couches de support et au moins une couche de support étant formée de plusieurs couches individuelles,
**caractérisé en ce que** les couches individuelles sont disposées, de préférence fondues, à une couche individuelle précédente après et après respectivement en connexion à une opération de déformation partielle.

2. Procédé selon la revendication 1,
**caractérisé en ce que** les épaisseurs initiales des au moins deux couches sont .différentes.

3. Procédé selon la revendication 1 ou 2,
**caractérisé en ce qu'**au moins une couche en verre est développée et/ou qu'au moins une couche en matière synthétique est développée.

4. Procédé selon l'une des revendications 1 à 3,
**caractérisé en ce qu'**au moins deux couches présentent des indices de réfraction différents.

5. Procédé selon l'une des revendications 1 à 4,
**caractérisé en ce qu'**une couche double est fabriquée à partir de deux couches.

6. Procédé selon la revendication 5,
**caractérisé en ce qu'**au moins deux couches doubles sont empilées, l'épaisseur de couche optique variant de préférence de couche double à couche double.

7. Procédé selon l'une des revendications 1 à 6,
**caractérisé en ce que** la disposition comprend un empilage et/ou un enroulement des couches.

8. Procédé selon l'une des revendications 1 à 7,
**caractérisé en ce que** les couches de support ou des couches individuelles sont formées de verre.

9. Procédé selon l'une des revendications 1 à 8,
**caractérisé en ce que** les couches sont reliées par une fusion après la disposition des couches les unes sur les autres, la fusion étant de préférence effectuée sous vide.

10. Procédé selon l'une des revendications 1 à 9,
**caractérisé en ce que** la déformation est effectuée par une opération de pressage et/ou une opération de laminage et/ou une opération d'étirage.

11. Procédé selon l'une des revendications 1 à 10,
**caractérisé en ce que** la déformation est effectuée sous action thermique ou sans amenée de chaleur additionnelle.

12. Procédé selon l'une des revendications 1 à 11,
**caractérisé en ce que** des tubes ou des disques courbés sont fabriqués à partir du paquet de couches déformé, le paquet de couches étant de préférence disposé au voisinage de la surface intérieure des tubes ou des disques courbés.

13. Procédé selon l'une des revendications 1 à 12,
**caractérisé en ce que** le revêtement réfléchissant à plusieurs couches est réalisé dans le cadre d'un miroir à plusieurs couches ou dans le cadre d'une garniture de miroir à plusieurs couches sur un corps de base.
